# EUROPEAN PATENT APPLICATION

(11) **EP 4 601 179 A1**
(43) Date of publication of application: **13.08.2025**
(21) Application number: 24820922.3
(22) Date of filing: 25.09.2024
(51) Int. Cl.: H02M 7/48

(54) **POWER SUPPLY CONTROL CIRCUIT AND AIR CONDITIONER COMPRISING SAME**

(30) Priority: 20.12.2023 JP 2023215195
(71) Applicant: Daikin Industries, Ltd., Osaka-Shi, Osaka 530-0001 (JP)
(72) Inventor: FUJIWARA, Masahide, (JP); KOTERA, Keito, (JP); ITOU, Taku, (JP); HIRAOKA, Nobuyasu, (JP); NAKATSUJI, Yosuke, (JP); DOI, Hirotaka, (JP); TANIMUKAI, Kazuma, (JP)
(74) Representative: Hoffmann Eitle
(86) International application number: PCT/JP2024/034046
(87) International publication number: WO 2025/134457

(57) **Abstract**

An object of the present disclosure is to provide a power source control circuit capable of controlling two switching circuits with one microcomputer. In a power source control circuit (100), a reference potential of a second switching circuit (25B) is different from a reference potential of a first switching circuit (25A). A microcomputer (40) outputs a first control signal (PWM-1) for the first switching circuit (25A) and a second control signal (PWM-2) for the second switching circuit (25B). A first potential conversion unit (46A) converts a potential of the second control signal (PWM-2). In the power source control circuit (100), since a potential of either one of the two control signals can be converted by the first potential conversion unit (46A), two switching circuits having different reference potentials can be controlled by one microcomputer.

## Description

### TECHNICAL FIELD

The present disclosure relates to a power source control circuit equipped in a three-phase four-wire 400 V air conditioner.

### BACKGROUND ART

As a device that controls a 400 V AC motor and a 200 V AC motor using an N phase in a three-phase four-wire 400 V air conditioner, for example, a control device disclosed in Patent Literature 1 (WO2017/200027) is known. In the control device, a signal for controlling a compressor motor and a signal for controlling a fan motor are output from a microcomputer. However, since the microcomputer and the fan motor do not have a common ground, the signal for controlling the fan motor is input to the fan motor via a photocoupler.

### SUMMARY OF INVENTION

### <Technical Problem>

However, the fan motor described in Patent Literature 1 incorporates a microcomputer, a drive circuit, and a switching circuit, and substantially requires two microcomputers. Therefore, from the viewpoint of cost reduction, it is desirable to control two switching circuits with one microcomputer.

### <Solution to Problem>

A power source control circuit according to a first aspect is a power source control circuit mounted on a printed wiring board that configured such that an R phase, an S phase, a T phase, and an N phase are input from an AC power source that supplies a three-phase AC in a three-phase four-wire system, the power source control circuit including a first rectifier circuit, a second rectifier circuit, a first switching circuit, a second switching circuit, a microcomputer, and a first potential conversion unit. The first rectifier circuit rectifies an AC voltage of the R phase, the S phase, and the T phase. The second rectifier circuit rectifies an AC voltage of any one of the R phase, the S phase, or the T phase and the N phase. The first switching circuit is connected to the first rectifier circuit. The second switching circuit is connected to the second rectifier circuit, and has a reference potential different from a reference potential of the first switching circuit. The microcomputer outputs a first control signal for the first switching circuit and a second control signal for the second switching circuit. The first potential conversion unit converts a potential of the first control signal or the second control signal.

Conventionally, in a power source control circuit that controls two switching circuits having different reference potentials, potentials of control signals output to the switching circuits are different, and thus microcomputers corresponding to the switching circuits are required.

However, in this power source control circuit, since the potential of either one of the two control signals can be converted by the first potential conversion unit, two switching circuits having different reference potentials can be controlled by one microcomputer.

A power source control circuit according to a second aspect is the power source control circuit according to the first aspect, in which a transmission speed of the first potential conversion unit is 10 Mbps or more.

In this power source control circuit, a delay in the transmission speed due to an operation time of the first potential conversion unit is suppressed.

A power source control circuit according to a third aspect is the power source control circuit according to the first or second aspect, and further includes a first current detector, a second current detector, and a third potential conversion unit. The first current detector detects a load current of the first switching circuit and outputs a detected current value as a first current detection signal to the microcomputer. The second current detector detects a load current of the second switching circuit and outputs a detected current value as a second current detection signal to the microcomputer. The third potential conversion unit converts a potential of the first current detection signal or the second current detection signal that has a reference potential different from a reference potential of the microcomputer.

A power source control circuit according to a fourth aspect is the power source control circuit according to the first or second aspect, and further includes a first voltage detector, a second voltage detector, and a second potential conversion unit. The first voltage detector detects a voltage across a first smoothing capacitor that smooths an output voltage from the first rectifier circuit, and outputs a detected voltage value as a first voltage detection signal to the microcomputer. The second voltage detector detects a voltage across a second smoothing capacitor that smooths an output voltage from the second rectifier circuit, and outputs a detected voltage value as a second voltage detection signal to the microcomputer. The second potential conversion unit converts a potential of the first voltage detection signal or the second voltage detection signal that has a reference potential different from the reference potential of the microcomputer.

A power source control circuit according to a fifth aspect is the power source control circuit according to any one of the first to fourth aspects, in which a shortest distance from the first potential conversion unit to the first switching circuit or a shortest distance from the first potential conversion unit to the second switching circuit is smaller than a shortest distance from the microcomputer to the first potential conversion unit.

**In** this power source control circuit, the shorter the distance from the first potential conversion unit to each switching circuit, the smaller the size of the printed wiring board, thus contributes to downsizing of the power source control circuit.

A power source control circuit according to a sixth aspect is the power source control circuit according to any one of the first to fifth aspects, in which at least one of the first switching circuit or the second switching circuit is a power module in which a plurality of switching elements that converts DC power into AC power of a predetermined frequency is incorporated in one package.

In this power source control circuit, modularization of each switching circuit facilitates design of a peripheral circuit of the switching circuit in the printed wiring board.

A power source control circuit according to a seventh aspect is a power source control circuit mounted on a printed wiring board that configured such that an R phase, an S phase, a T phase, and an N phase are input from an AC power source that supplies a three-phase AC in a three-phase four-wire system, the power source control circuit including a first rectifier circuit, a first switching circuit, a third switching circuit, a microcomputer, and a first potential conversion unit. The first rectifier circuit rectifies an AC voltage of the R phase, the S phase, and the T phase. The first switching circuit is connected to the first rectifier circuit. The third switching circuit is connected in parallel between the AC power source and the first rectifier circuit, and has a reference potential different from a reference potential of the first switching circuit. The microcomputer outputs a first control signal for the first switching circuit and a third control signal for the third switching circuit. The first potential conversion unit converts a potential of the first control signal or the third control signal.

Conventionally, in a power source control circuit that controls two switching circuits having different reference potentials, potentials of control signals output to the switching circuits are different, and thus microcomputers corresponding to the switching circuits are required.

However, in this power source control circuit, since the potential of either one of the two control signals can be converted by the first potential conversion unit, two switching circuits having different reference potentials can be controlled by one microcomputer.

A power source control circuit according to an eighth aspect is the power source control circuit according to the seventh aspect, in which a transmission speed of the first potential conversion unit is 10 Mbps or more.

In this power source control circuit, a delay in the transmission speed due to an operation time of the first potential conversion unit is suppressed.

A power source control circuit according to a ninth aspect is the power source control circuit according to the seventh or eighth aspect, and further includes a first current detector, a third current detector, and a third potential conversion unit. The first current detector detects a load current of the first switching circuit and outputs a detected current value as a first current detection signal to the microcomputer. The third current detector detects a bus current of the third switching circuit and outputs the detected current value as the third current detection signal to the microcomputer. The third potential conversion unit converts a potential of the first current detection signal or the third current detection signal that has a reference potential different from a reference potential of the microcomputer.

A power source control circuit according to a tenth aspect is the power source control circuit according to the seventh or eighth aspect, and further includes a first voltage detector, a third voltage detector, and a second potential conversion unit. The first voltage detector detects a voltage across a first smoothing capacitor that smooths an output voltage from the first rectifier circuit, and outputs a detected voltage value as a first voltage detection signal to the microcomputer. The third voltage detector detects a voltage across the third smoothing capacitor that smooths an output voltage from the third switching circuit, and outputs the detected voltage value as a third voltage detection signal to the microcomputer. The second potential conversion unit converts a potential of the first voltage detection signal or the third voltage detection signal that has a reference potential different from the reference potential of the microcomputer.

A power source control circuit according to an eleventh aspect is the power source control circuit according to any one of the seventh to tenth aspects, in which a shortest distance from the first potential conversion unit to the first switching circuit or a shortest distance from the first potential conversion unit to the third switching circuit is smaller than a shortest distance from the microcomputer to the first potential conversion unit.

In this power source control circuit, the shorter the distance from the first potential conversion unit to each switching circuit, the smaller the size of the printed wiring board, thus contributes to downsizing of the power source control circuit.

A power source control circuit according to a twelfth aspect is the power source control circuit according to any one of the seventh to eleventh aspects, in which the third switching circuit is a power module in which a plurality of switching elements that generates a compensation current for suppressing a harmonic current is incorporated in one package.

In this power source control circuit, modularization of the third switching circuit facilitates design of a peripheral circuit of the third switching circuit in the printed wiring board.

A power source control circuit according to a thirteenth aspect is the power source control circuit according to any one of the first to twelfth aspects, and further includes a power factor correction circuit. The power factor correction circuit includes a first switching element, a rectifier element, and a reactor, inputs a voltage rectified by the first rectifier circuit, and improves a power factor of the AC power source by the microcomputer controlling the first switching element to be turned on and off.

A power source control circuit according to a fourteenth aspect is the power source control circuit according to the thirteenth aspect, and is a power module in which at least the first switching element and the rectifier element are incorporated in one package.

In this power source control circuit, modularization facilitates design of a peripheral circuit of the power factor correction circuit in the printed wiring board.

An air conditioner according to a fifteenth aspect is an air conditioner including the power source control circuit according to any one of the first to fourteenth aspects.

### BRIEF DESCRIPTION OF DRAWINGS

FIG. 1 is a circuit diagram showing a configuration of a power source control circuit according to a first embodiment of the present disclosure.
FIG. 2 is a configuration diagram of a switching circuit and a gate drive circuit that drives the switching circuit.
FIG. 3 is a circuit diagram showing a configuration of a power source control circuit according to a second embodiment of the present disclosure.
FIG. 4 is a configuration diagram of a third switching circuit and a gate drive circuit that drives the third switching circuit.
FIG. 5 is a circuit diagram showing a configuration of a power source control circuit according to a first modification of the first embodiment.
FIG. 6 is a circuit diagram showing a configuration of a power source control circuit according to a first modification of the second embodiment.
FIG. 7 is a partial plan view of a printed wiring board showing a positional relationship between a first switching circuit, a second switching circuit, a microcomputer, and a potential conversion unit according to a second modification of the first embodiment.
FIG. 8 is a circuit diagram showing a configuration of a power source control circuit according to another embodiment.
FIG. 9 is a configuration diagram of a PWM converter and a fourth gate drive circuit that drives the PWM converter.

### DESCRIPTION OF EMBODIMENTS

### <First embodiment>

### (1) Outline of power source control circuit 100

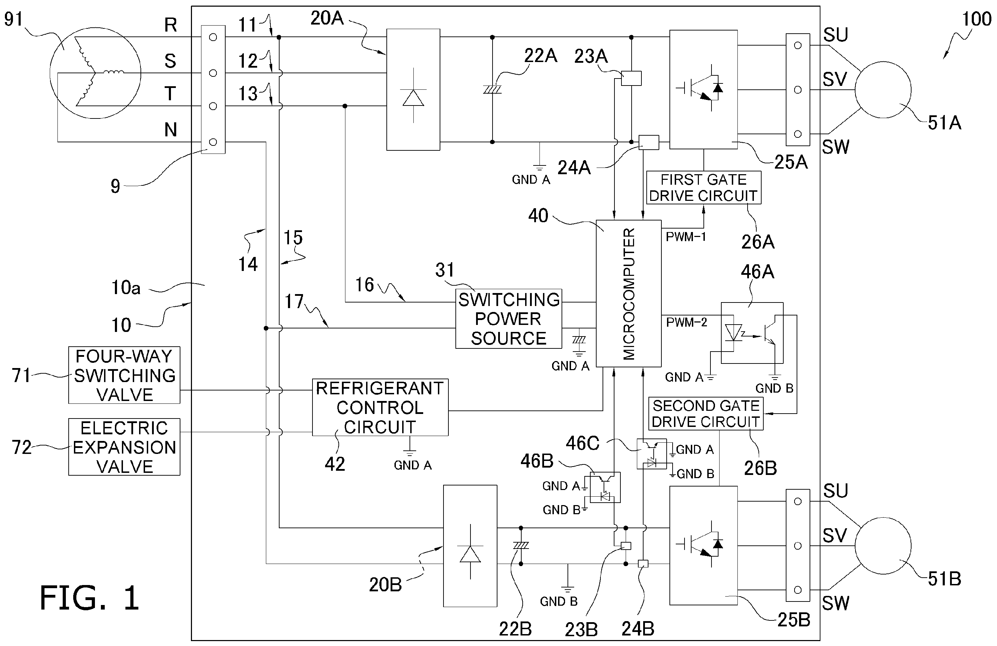

FIG. 1 is a circuit diagram showing a configuration of a power source control circuit 100 according to a first embodiment of the present disclosure. In FIG. 1, the power source control circuit 100 is mounted on a printed wiring board 10 configured such that an R phase, an S phase, a T phase, and an N phase are input from an AC power source 91 that supplies a three-phase AC in a three-phase four-wire system.

The power source control circuit 100 includes a first rectifier circuit 20A, a second rectifier circuit 20B, a first voltage detector 23A, a second voltage detector 23B, a first current detector 24A, a second current detector 24B, a first switching circuit 25A, a second switching circuit 25B, a microcomputer 40, a first potential conversion unit 46A, a second potential conversion unit 46B, and a third potential conversion unit 46C.

The first rectifier circuit 20A rectifies AC power of the R phase, the S phase, and the T phase. The second rectifier circuit 20B rectifies AC power of any one of the R phase, the S phase, or the T phase and the N phase.

The first voltage detector 23A detects a voltage across the first smoothing capacitor 22A that smooths an output voltage from the first rectifier circuit 20A, and outputs the detected voltage value as a first voltage detection signal to the microcomputer 40.

The second voltage detector 23B detects a voltage across the second smoothing capacitor 22B that smooths an output voltage from the second rectifier circuit 20B, and outputs the detected voltage value as a second voltage detection signal to the microcomputer 40.

The first current detector 24A detects a load current of the first switching circuit 25A and outputs the detected current value as the first current detection signal to the microcomputer 40.

The second current detector 24B detects a load current of the second switching circuit 25B and outputs the detected current value as a second current detection signal to the microcomputer 40.

The first switching circuit 25A is connected to the first rectifier circuit 20A. The second switching circuit 25B is connected to the second rectifier circuit 20B, and has a reference potential different from a reference potential of the first switching circuit 25A.

The microcomputer 40 outputs a first control signal PWM-1 for the first switching circuit 25A and a second control signal PWM-2 for the second switching circuit 25B. The first potential conversion unit 46A converts a potential of the first control signal PWM-1 or the second control signal PWM-2.

The second potential conversion unit 46B converts the potential of the first voltage detection signal or the second voltage detection signal that has a reference potential different from a reference potential of the microcomputer 40.

The third potential conversion unit 46C converts the potential of the first current detection signal or the second current detection signal that has a reference potential different from the reference potential of the microcomputer 40.

The power source control circuit 100 of the present disclosure is equipped in, for example, an outdoor unit of a three-phase four-wire 400 V air conditioner.

### (2) Detailed configuration

### (2-1) Printed wiring board 10

The printed wiring board 10 is a multilayer printed wiring board having a plurality of conductive pattern layers laminated with an insulator layer interposed in between.

On the printed wiring board 10, an input terminal 9, the first rectifier circuit 20A, the second rectifier circuit 20B, the first switching circuit 25A, the second switching circuit 25B, a switching power source 31, a refrigerant control circuit 42, the first potential conversion unit 46A, the second potential conversion unit 46B, the third potential conversion unit 46C, which are components of the power source control circuit 100, and the microcomputer 40 that controls these components are mounted.

The input terminal 9 is configured such that the R phase, the S phase, the T phase, and the N phase are input from the AC power source 91 that supplies a three-phase AC in a three-phase four-wire system. A first wire 11, a second wire 12, a third wire 13, and a fourth wire 14, which are conductive patterns, are connected to each of the R phase, the S phase, the T phase, and the N phase of the AC power source 91 via the input terminal 9.

### (2-2) First rectifier circuit 20A

The first rectifier circuit 20A is a three-phase diode bridge that performs full-wave rectification of AC power input from the first wire 11 linked to the R phase, the second wire 12 linked to the S phase, and the third wire 13 linked to the T phase.

The first rectifier circuit 20A is a diode module in which six bridge-connected diode chips are incorporated in one package, and is mounted on a first surface 10a of the printed wiring board 10.

### (2-3) Second rectifier circuit 20B

The second rectifier circuit 20B is a single-phase diode bridge that performs full-wave rectification of AC power input from the fourth wire 14 linked to the N phase and a fifth wire 15 branching from the first wire 11. The wire from which the fifth wire 15 branches may be any of the first wire 11, the second wire 12, or the third wire 13.

The second rectifier circuit 20B is a diode module in which four bridge-connected diode chips are incorporated in one package.

### (2-4) First smoothing capacitor 22A and second smoothing capacitor 22B

The first smoothing capacitor 22A smooths the output voltage from the first rectifier circuit 20A. The second smoothing capacitor 22B smooths the output voltage from the second rectifier circuit 20B.

### (2-5) First voltage detector 23A

The first voltage detector 23A is connected to an output side of the first smoothing capacitor 22A, and detects the voltage across the first smoothing capacitor 22A. The first voltage detector 23A is configured such that two resistances connected in series to each other are connected in parallel to the smoothing capacitor 22, and the voltage across the first smoothing capacitor 22A is divided. A voltage value at a connection point between the two resistances is inputted to the microcomputer 40.

The first voltage detector 23A is not required to be provided, and can be replaced by another means.

### (2-6) Second voltage detector 23B

The second voltage detector 23B is connected to an output side of the second smoothing capacitor 22B, and detects the voltage across the second smoothing capacitor 22B. The second voltage detector 23B is configured such that two resistances connected in series to each other are connected in parallel to the second smoothing capacitor 22B, and the voltage across the second smoothing capacitor 22B is divided. A voltage value at a connection point between the two resistances is inputted to the microcomputer 40.

The second voltage detector 23B is not required to be provided, and can be replaced by another means.

### (2-7) First current detector 24A

The first current detector 24A is connected between the first smoothing capacitor 22A and the first switching circuit 25A and to a negative output terminal side of the first smoothing capacitor 22A. The first current detector 24A detects a motor current flowing through a first motor 51A after an activation of the first motor 51A.

The first current detector 24A may include an amplifier circuit using a shunt resistance and an operational amplifier that amplifies a voltage across the resistance. The motor current detected by the first current detector 24A is inputted to the microcomputer 40.

### (2-8) Second current detector 24B

The second current detector 24B is connected between the second smoothing capacitor 22B and the second switching circuit 25B and to a negative output terminal side of the second smoothing capacitor 22B. The second current detector 24B detects a motor current flowing through the second motor 51B after an activation of the second motor 51B.

The second current detector 24B may include an amplifier circuit using a shunt resistance and an operational amplifier that amplifies a voltage across the resistance. The motor current detected by the second current detector 24B is inputted to the microcomputer 40.

### (2-9) First switching circuit 25A and second switching circuit 25B

The first switching circuit 25Ais an inverter circuit connected to the output side of the first smoothing capacitor 22A. The second switching circuit 25B is an inverter circuit connected to the output side of the second smoothing capacitor 22B. The first switching circuit 25A and the second switching circuit 25B, which have the same configuration, will be described as a switching circuit 25.

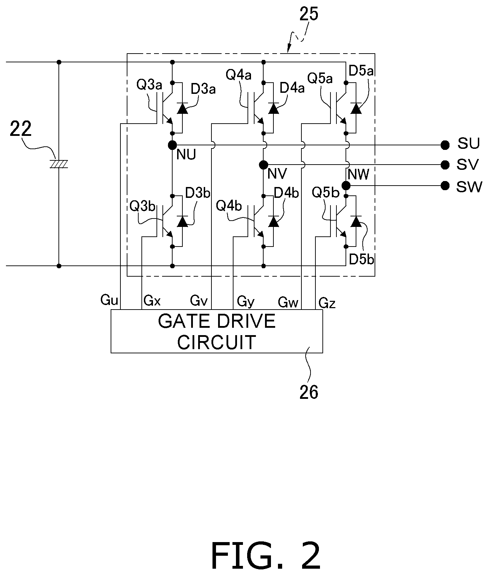

FIG. 2 is a configuration diagram of the switching circuit 25 and a gate drive circuit 26 that drives the switching circuit 25. In FIG. 2, the switching circuit 25 includes, as switching elements, a plurality of insulated gate bipolar transistors (hereinafter, simply referred to as transistors) Q3a, Q3b, Q4a, Q4b, Q5a, and Q5b, and a plurality of reflux diodes D3a, D3b, D4a, D4b, D5a, and D5b.

The transistors Q3a and Q3b, Q4a and Q4b, and Q5a and Q5b are connected in series with each other, and the diodes D3a to D5b are respectively connected in parallel with the transistors Q3a to Q5b with a collector terminal of each transistor connected to a cathode terminal of the corresponding diode and an emitter terminal of each transistor connected to an anode terminal of the corresponding diode.

The switching circuit 25 generates drive voltages SU, SV, and SW for driving a motor, by applying a DC voltage from the smoothing capacitor 22 and turning on and off the transistors Q3a to Q5b at a timing instructed by the gate drive circuit 26. The drive voltages SU, SV, and SW are output to the motor from connection points NU, NV, and NW of the transistors Q3a and Q3b, Q4a and Q4b, and Q5a and Q5b, respectively.

The first switching circuit 25A and the second switching circuit 25B are power modules in which upper arm-side switching elements (Q3a, Q4a, Q5a, D3a, D4a, and D5a) and lower arm-side switching elements (Q3b, Q4b, Q5b, D3b, D4b, and D5b) are incorporated in one package.

The first switching circuit 25A and the second switching circuit 25B are mounted on the first surface 10a of the printed wiring board 10.

### (2-10) First gate drive circuit 26A and second gate drive circuit 26B

The first gate drive circuit 26A changes on and off states of the transistors Q3a to Q5b of the first switching circuit 25A on the basis of the first control signal PWM-1 from the microcomputer 40. The second gate drive circuit 26B changes on and off states of the transistors Q3a to Q5b of the second switching circuit 25B on the basis of the second control signal PWM-2 from the microcomputer 40.

The first gate drive circuit 26A and the second gate drive circuit 26B, which have the same configuration, will be described as a gate drive circuit 26.

As shown in FIG. 2, the gate drive circuit 26 generates gate control voltages Gu, Gx, Gv, Gy, Gw, and Gz to be respectively applied to gates of the transistors Q3a to Q5b such that the switching circuit 25 outputs, to the motor, the drive voltages SU, SV, and SW in a duty ratio determined by the microcomputer 40. The gate control voltages Gu, Gx, Gv, Gy, Gw, and Gz thus generated are respectively applied to gate terminals of the transistors Q3a to Q5b.

### (2-11) Microcomputer 40

The microcomputer 40 is connected to the first voltage detector 23A, the first current detector 24A, and the first gate drive circuit 26A. The microcomputer 40 controls the first gate drive circuit 26A to drive the first motor 51A. The first motor 51A is a motor that drives a compressor.

The microcomputer 40 is connected to the second gate drive circuit 26B via the first potential conversion unit 46A. The microcomputer 40 controls the second gate drive circuit 26B to drive the second motor 51B. The second motor 51B is a motor that drives a fan.

The microcomputer 40 is connected to the second voltage detector 23B via the second potential conversion unit 46B. Furthermore, the microcomputer 40 is connected to the second current detector 24B via the third potential conversion unit 46C.

The microcomputer 40 also functions as a refrigerant control microcomputer. For example, the microcomputer 40 controls the refrigerant control circuit 42 of the air conditioner to adjust a circulation direction of a refrigerant in a refrigerant circuit, an evaporation temperature of the refrigerant, a degree of superheating, and a degree of subcooling.

### (2-12) Switching power source 31

The switching power source 31 converts AC power input from a sixth wire 16 branched from the third wire 13 and a seventh wire 17 branched from the fourth wire 14 into DC power of a predetermined voltage, and supplies the converted DC power to the microcomputer 40 and the like. The wire from which the sixth wire 16 branches may be any of the first wire 11, the second wire 12, or the third wire 13.

### (2-13) Refrigerant control circuit 42

The refrigerant control circuit 42 controls an operation of a four-way switching valve 71 that switches the circulation direction of the refrigerant circulating in the refrigerant circuit of the air conditioner, and an operation of an electric expansion valve 72 that adjusts the evaporation temperature, the degree of superheating, and the degree of subcooling of the refrigerant on the basis of a command from the microcomputer 40.

A ground potential of the refrigerant control circuit 42 is GND-A which is the same as a ground potential of the first switching circuit 25A.

### (2-14) First to third potential conversion units (46A to 46C)

The first potential conversion unit 46Ais provided between the microcomputer 40 and the second gate drive circuit 26B, and an input signal from the microcomputer 40 to the first potential conversion unit 46A and an output signal from the first potential conversion unit 46A to the second gate drive circuit 26B are insulated.

The second potential conversion unit 46B is provided between the microcomputer 40 and the second voltage detector 23B, and an input signal from the second voltage detector 23B to the second potential conversion unit 46B and an output signal from the second potential conversion unit 46B to the microcomputer 40 are insulated. However, the second voltage detector 23B is not required to be provided, and in that case, the second potential conversion unit 46B is unnecessary.

The third potential conversion unit 46C is provided between the microcomputer 40 and the second current detector 24B, and an input signal from the second current detector 24B to the third potential conversion unit 46C and an output signal from the third potential conversion unit 46C to the microcomputer 40 are insulated.

A ground potential on an input side of the first potential conversion unit 46A is GND-A, and a ground potential on an output side of the first potential conversion unit 46A is GND-B.

A ground potential on an input side of the second potential conversion unit 46B is GND-B, and a ground potential on an output side of the second potential conversion unit 46B is GND-A.

A ground potential on an input side of the third potential conversion unit 46C is GND-B, and a ground potential on an output side of the third potential conversion unit 46C is GND-A.

An insulating IC such as a high-speed photocoupler or a digital isolator is adopted for the first potential conversion unit 46A, the second potential conversion unit 46B, and the third potential conversion unit 46C. In the present embodiment, a high-speed photocoupler having a transmission speed of 10 Mbps or more is adopted.

A decrease in the transmission speed from the first potential conversion unit 46A, the second potential conversion unit 46B, and the third potential conversion unit 46C occurs a delay time of the circuit. Specifically, for example, when the transmission speed from the third potential conversion unit 46C decreases, overcurrent protection and current detection cannot be performed. Therefore, a high speed of 10 Mbps or more minimizes the influence of the delay time of the circuit.

### (3) Relationship between microcomputer 40 and first to third potential conversion units (46A to 46C)

In the present embodiment, the ground potential GND-A of the circuit from the first rectifier circuit 20A to the first switching circuit 25A is a potential different from the ground potential GND-B of the circuit from the second rectifier circuit 20B to the second switching circuit 25B.

When the ground potentials are different, the microcomputer needs to supply control signals having different ground potentials to the first switching circuit 25A and the second switching circuit 25B.

The microcomputer also needs to receive voltage detection signals having different ground potentials from the first voltage detector 23A and the second voltage detector 23B.

Furthermore, the microcomputer needs to receive current detection signals having different ground potentials from the first current detector 24A and the second current detector 24B.

Therefore, a plurality of microcomputers is required. As a result, the cost increases.

Therefore, in the present embodiment, since one microcomputer 40 controls the first switching circuit 25A and the second switching circuit 25B, the ground potential of the second control signal PWM-2 to the second switching circuit 25B is converted into a different ground potential in the first potential conversion unit 46A.

Therefore, the ground potentials of the first control signal PWM-1 to the first switching circuit 25A and the second control signal PWM-2 to the second switching circuit 25B output from the microcomputer 40 may be the same ground potential GND-A.

The second voltage detection signal from the second voltage detector 23B to the microcomputer 40 is converted into a different ground potential in the second potential conversion unit 46B.

Therefore, the first voltage detection signal from the first voltage detector 23A to the microcomputer 40 and the second voltage detection signal from the second voltage detector 23B to the microcomputer 40 may have different ground potentials.

Furthermore, the second current detection signal from the second current detector 24B to the microcomputer 40 is converted into a different ground potential in the third potential conversion unit 46C.

Therefore, the first current detection signal from the first current detector 24A to the microcomputer 40 and the second current detection signal from the second current detector 24B to the microcomputer 40 may have different ground potentials.

### (3-1) First control signal PWM-1 to first switching circuit 25A

The microcomputer 40 generates the first control signal PWM-1 with the switching power source 31 as a reference potential, and outputs the first control signal PWM-1 to the first gate drive circuit 26A. The first control signal PWM-1 has a predetermined duty ratio for controlling rotation of the first motor 51A.

The first control signal PWM-1 is converted into a gate pulse by the first gate drive circuit 26A. The switching elements of upper and lower arms of the first switching circuit 25A are controlled to be turned on and off by the gate pulse, and a three-phase AC voltage is supplied to the first motor 51A.

### (3-2) Second control signal PWM-2 to second switching circuit 25B

The microcomputer 40 generates the second control signal PWM-2 with the switching power source 31 as a reference potential. The second control signal PWM-2 has a predetermined duty ratio for controlling rotation of the second motor 51B.

Since the first potential conversion unit 46A is provided between the microcomputer 40 and the second gate drive circuit 26B, the ground potential GND-A of the second control signal PWM-2 input to the first potential conversion unit 46A is converted to the same potential as the ground potential GND-B on the output side of the first potential conversion unit 46A.

The second control signal PWM-2 subjected to the potential conversion is converted into a gate pulse by the second gate drive circuit 26B. The switching elements of upper and lower arms of the second switching circuit 25B are controlled to be turned on and off by the gate pulse, and a three-phase AC voltage is supplied to the second motor 51B.

### (3-3) First voltage detection signal of first voltage detector 23A to microcomputer 40

The ground potential of the first voltage detector 23A is the same as the ground potential GND-A of the first switching circuit 25A and the microcomputer 40. Therefore, the first voltage detection signal from the first voltage detector 23A is directly input to the microcomputer 40.

### (3-4) Second voltage detection signal of second voltage detector 23B to microcomputer 40

The ground potential of the second voltage detector 23B is the same as the ground potential GND-B of the second switching circuit 25B. The second potential conversion unit 46B is provided between the second voltage detector 23B and the microcomputer 40. Therefore, the ground potential GND-B of the second voltage detection signal input to the second potential conversion unit 46B is converted to the same potential as the ground potential GND-A on the output side of the second potential conversion unit 46B. The second voltage detection signal subjected to potential conversion is input to the microcomputer 40.

### (3-5) First current detection signal of first current detector 24A to microcomputer 40

The ground potential of the first current detector 24A is the same as the ground potential GND-A of the first switching circuit 25A and the microcomputer 40. Therefore, the first current detection signal from the first current detector 24A is directly input to the microcomputer 40.

### (3-6) Second current detection signal of second current detector 24B to microcomputer 40

The ground potential of the second current detector 24B is the same as the ground potential GND-B of the second switching circuit 25B. The third potential conversion unit 46C is provided between the second current detector 24B and the microcomputer 40. Therefore, the ground potential GND-B of the second current detection signal input to the third potential conversion unit 46C is converted to the same potential as the ground potential GND-A on the output side of the third potential conversion unit 46C. The second current detection signal subjected to potential conversion is input to the microcomputer 40.

### (3-7) Effects

In the present embodiment, since the high-speed photocouplers are used as the first potential conversion unit 46A, the second potential conversion unit 46B, and the third potential conversion unit 46C, a delay in the transmission speed due to an operation time of the first potential conversion unit 46A, the second potential conversion unit 46B, and the third potential conversion unit 46C is suppressed.

Since the input signal and the output signal of the first potential conversion unit 46A are insulated, any influence of noise will not directly have an effect in the signal input to the second gate drive circuit 26B.

Although the ground potentials of the first switching circuit 25A and the second switching circuit 25B are different from each other, the ground potentials of the second gate drive circuit 26B and the second switching circuit 25B are common to the ground potential GND-B on the output side of the first potential conversion unit 46A, and therefore, malfunction can be prevented.

Since the input signals and the output signals of the second potential conversion unit 46B and the third potential conversion unit 46C are insulated, any influence of noise will not directly have an effect in the signal input to the microcomputer 40.

Although the ground potentials of the first voltage detector 23A and the first current detector 24A are different from the ground potentials of the second voltage detector 23B and the second current detector 24B, the ground potential of each of the first voltage detector 23A and the first current detector 24A is common to the ground potential GND-A on the output side of each of the second potential conversion unit 46B and the third potential conversion unit 46C, and therefore, malfunction can be prevented.

As a result, the refrigerant control circuit 42, the first switching circuit 25A, and the second switching circuit 25B are controlled by one microcomputer 40.

### (4) Characteristics of first embodiment

(4-1)
   In the power source control circuit 100, a reference potential of the second switching circuit 25B is different from a reference potential of the first switching circuit 25A. The microcomputer 40 outputs the first control signal PWM-1 for the first switching circuit 25A and the second control signal PWM-2 for the second switching circuit 25B. The first potential conversion unit 46A converts the potential of the second control signal PWM-2. In the power source control circuit 100, since the potential of either one of the two control signals can be converted by the first potential conversion unit 46A, two switching circuits having different reference potentials can be controlled by one microcomputer.
(4-2)
   In the power source control circuit 100, the first voltage detector 23A detects a voltage across the first smoothing capacitor 22A and outputs the detected voltage value as a first voltage detection signal to the microcomputer 40. The second voltage detector 23B detects a voltage across the second smoothing capacitor 22B and outputs the detected voltage value as the second voltage detection signal to the microcomputer 40. The second potential conversion unit 46B converts the reference potential of the second voltage detection signal.
(4-3)
   In the power source control circuit 100, the first current detector 24A detects a load current of the first switching circuit 25A and outputs the detected current value as the first current detection signal to the microcomputer 40. The second current detector 24B detects a load current of the second switching circuit 25B and outputs the detected current value as a second current detection signal to the microcomputer 40. The third potential conversion unit 46C converts the reference potential of the second current detection signal.
(4-4)
   The first potential conversion unit 46A, the second potential conversion unit 46B, and the third potential conversion unit 46C are high-speed photocouplers having a transmission speed of 10 Mbps or more. In the power source control circuit 100, a delay in the transmission speed due to the operation time of the first potential conversion unit 46A, the second potential conversion unit 46B, and the third potential conversion unit 46C is suppressed.
(4-5)
   The first switching circuit 25A and the second switching circuit 25B are power modules in which a plurality of switching elements that converts DC power into AC power of a predetermined frequency is incorporated in one package. Modularization of each switching circuit facilitates design of a peripheral circuit of each switching circuit in the printed wiring board 10.

### <Second embodiment>

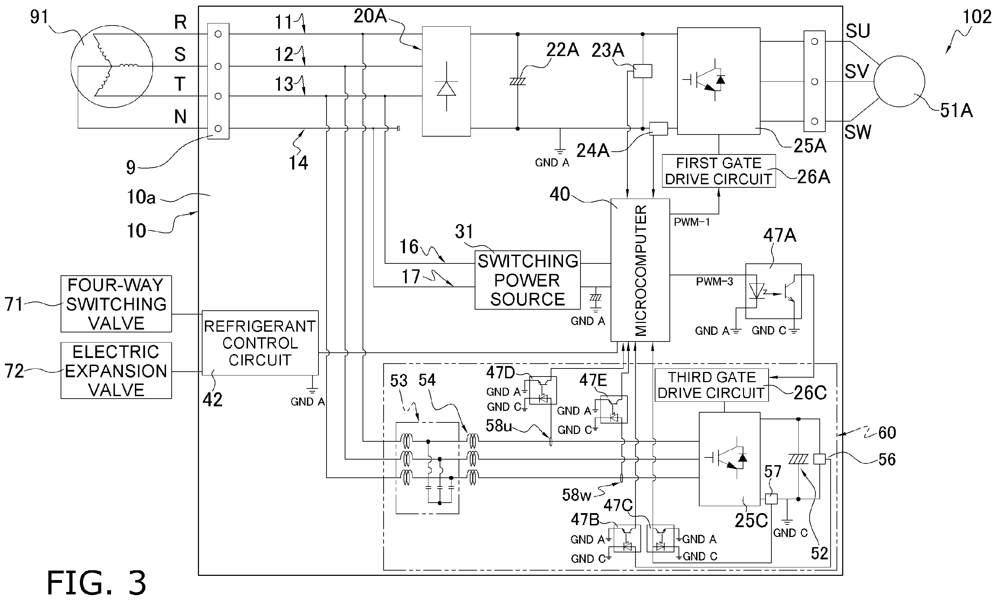

FIG. 3 is a circuit diagram showing a configuration of a power source control circuit 102 according to a second embodiment of the present disclosure. In FIG. 3, since the circuit configuration from the AC power source 91 leading up to the first motor 51A and from the AC power source 91 leading up to the switching power source 31 is the same as the circuit configuration in the first embodiment, the same reference signs as in the first embodiment are given and description thereof is omitted.

### (1) Outline of power source control circuit 102

As shown in FIG. 3, the power source control circuit 102 is mounted on the printed wiring board 10 configured such that the R phase, the S phase, the T phase, the N phase are input from the AC power source 91 that supplies a three-phase AC in a three-phase four-wire system.

The power source control circuit 102 includes the first rectifier circuit 20A, the first voltage detector 23A, the first current detector 24A, the first switching circuit 25A, a third voltage detector 56, a third current detector 57, a U-phase current detector 58u, a W-phase current detector 58w, an active filter circuit 60, the microcomputer 40, a first potential conversion unit 47A, a second potential conversion unit 47B, a third potential conversion unit 47C, a fourth potential conversion unit 47D, and a fifth potential conversion unit 47E.

The first rectifier circuit 20A rectifies AC power of the R phase, the S phase, and the T phase. The first voltage detector 23A detects a voltage across the first smoothing capacitor 22A that smooths an output voltage from the first rectifier circuit 20A, and outputs the detected voltage value as a first voltage detection signal to the microcomputer 40.

The first current detector 24A detects a load current of the first switching circuit 25A and outputs the detected current value as the first current detection signal to the microcomputer 40.

The first switching circuit 25A is connected to the first rectifier circuit 20A. The active filter circuit 60 includes a third switching circuit 25C.

The third switching circuit 25C is connected in parallel between the AC power source 91 and the first rectifier circuit 20A, and has a reference potential different from the reference potential of the first switching circuit 25A.

The third voltage detector 56 detects a voltage across the third smoothing capacitor 52 that smooths an output voltage from the third switching circuit 25C, and outputs the detected voltage value as a third voltage detection signal to the microcomputer 40.

The third current detector 57 detects a bus current of the third switching circuit 25C and outputs the detected current value as a third current detection signal to the microcomputer 40.

The U-phase current detector 58u detects a current flowing through the U phase of the third switching circuit 25C, and outputs the detected current value as a fourth current detection signal to the microcomputer 40.

The W-phase current detector 58w detects a current flowing through the W phase of the third switching circuit 25C, and outputs the detected current value as a fifth current detection signal to the microcomputer 40.

The microcomputer 40 outputs the first control signal PWM-1 for the first switching circuit 25A and a third control signal PWM-3 for the third switching circuit 25C.

The first potential conversion unit 47A converts a potential of the first control signal PWM-1 or the third control signal PWM-3.

The second potential conversion unit 47B converts the potential of the first voltage detection signal or the third voltage detection signal that has a reference potential different from a reference potential of the microcomputer 40.

The third potential conversion unit 47C converts the potential of the first current detection signal or the third current detection signal that has a reference potential different from the reference potential of the microcomputer 40.

The fourth potential conversion unit 47D converts the potential of the first current detection signal or the fourth current detection signal that has a reference potential different from the reference potential of the microcomputer 40.

The fifth potential conversion unit 47E converts the potential of the first current detection signal or the fifth current detection signal that has a reference potential different from the reference potential of the microcomputer 40.

The power source control circuit 102 of the present disclosure is equipped in, for example, an outdoor unit of a three-phase four-wire 400 V air conditioner.

### (2) Detailed configuration

### (2-1) Active filter circuit 60

The active filter circuit 60 includes the third switching circuit 25C, a third gate drive circuit 26C, the third smoothing capacitor 52, a carrier filter 53, a coupled reactor 54, the third voltage detector 56, the third current detector 57, the U-phase current detector 58u, and the W-phase current detector 58w.

### (2-1-1) Third switching circuit 25C

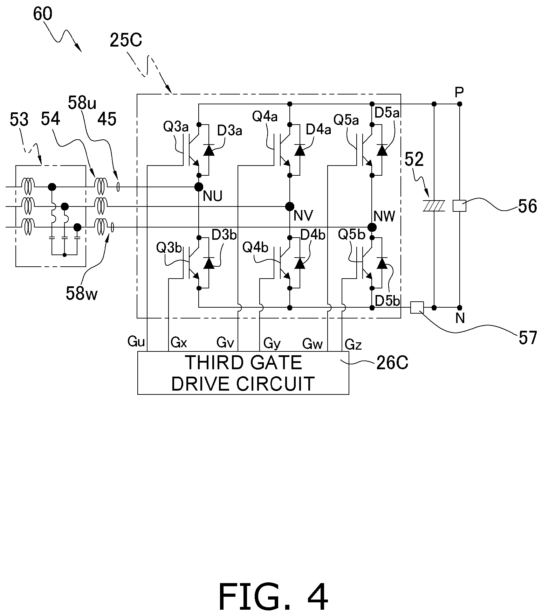

FIG. 4 is a detailed configuration diagram of the third switching circuit 25C. In FIG. 4, the third switching circuit 25C consists of a plurality of switching elements that generates a compensation current for suppressing a harmonic current.

A switching operation of the third switching circuit 25C is controlled by the third gate drive circuit 26C to control a current flowing between the AC power source 91 and the third switching circuit 25C, and thus, the harmonic current flowing from the first switching circuit 25A to the power source line is canceled.

Since the configuration of the third switching circuit 25C is the same as the configuration of the first switching circuit 25A, the transistors and the diodes which are switching elements are denoted by the same reference signs as the transistors and the diodes of the first switching circuit 25A.

The third switching circuit 25C is a power module in which the upper arm-side switching elements (Q3a, Q4a, Q5a, D3a, D4a, and D5a) and the lower arm-side switching elements (Q3b, Q4b, Q5b, D3b, D4b, and D5b) are incorporated in one package.

### (2-1-2) Third gate drive circuit 26C

The third gate drive circuit 26C controls the switching elements. The configuration and function of the third gate drive circuit 26C are similar to the configuration and function of the first gate drive circuit 26A, and thus will not be described.

### (2-1-3) Third smoothing capacitor 52

The third smoothing capacitor 52 is a capacitor that smooths the output voltage of the third switching circuit 25C.

### (2-1-4) Carrier filter 53

The carrier filter 53 removes noise associated with switching of the third switching circuit 25C. Specifically, the carrier filter 53 removes a high-frequency component of a compensation current generated by switching of the third switching circuit 25C.

### (2-1-5) Coupled reactor 54

The coupled reactor 54 interconnects the third switching circuit 25C and the power source line.

### (2-1-6) Third voltage detector 56

The third voltage detector 56 is connected to an output side of the third smoothing capacitor 52 and detects a voltage across the third smoothing capacitor 52. For example, the third voltage detector 56 is configured such that two resistances connected in series to each other are connected in parallel to the third smoothing capacitor 52, and a voltage across the third smoothing capacitor 52 is devided. A voltage value at a connection point between the two resistances is inputted to the microcomputer 40.

The third voltage detector 56 is not required to be provided, and can be replaced by another means.

### (2-1-7) Third current detector 57

The third current detector 57 is connected between the third smoothing capacitor 52 and the third switching circuit 25C and to a negative output terminal side of the third smoothing capacitor 52. The third current detector 57 detects a bus current of the third switching circuit 25C.

The third current detector 57 may include, for example, an amplifier circuit using a shunt resistance and an operational amplifier that amplifies a voltage across the resistance. The current detected by the third current detector 57 is inputted to the microcomputer 40.

### (2-1-8) U-phase current detector 58u and W-phase current detector 58w

The U-phase current detector 58u detects a compensation current flowing in a U phase. The W-phase current detector 58w detects a compensation current flowing in a W phase.

### (2-2) Microcomputer 40

The microcomputer 40 is connected to the first voltage detector 23A, the first current detector 24A, and the first gate drive circuit 26A. The microcomputer 40 controls the first gate drive circuit 26A to drive the first motor 51A.

The microcomputer 40 is connected to the third gate drive circuit 26C via the first potential conversion unit 47A. The microcomputer 40 is connected to the third voltage detector 56 via the second potential conversion unit 47B. The microcomputer 40 is connected to the third current detector 57 via the third potential conversion unit 47C. The microcomputer 40 is connected to the U-phase current detector 58u via the fourth potential conversion unit 47D. Furthermore, the microcomputer 40 is connected to the W-phase current detector 58w via the fifth potential conversion unit 47E.

The microcomputer 40 performs control of switch on and off of each switching element of the third switching circuit 25C on the basis of each detection value of the third voltage detector 56, the third current detector 57, the U-phase current detector 58u, and the W-phase current detector 58w.

The microcomputer 40 also functions as a refrigerant control microcomputer. For example, the microcomputer 40 controls the refrigerant control circuit 42 of the air conditioner to adjust a circulation direction of a refrigerant in a refrigerant circuit, an evaporation temperature of the refrigerant, a degree of superheating, and a degree of subcooling.

### (2-3) First to fifth potential conversion units (47A to 47E)

The first potential conversion unit 47Ais provided between the microcomputer 40 and the third gate drive circuit 26C, and an input signal from the microcomputer 40 to the first potential conversion unit 47A and an output signal from the first potential conversion unit 47A to the third gate drive circuit 26C are insulated.

The second potential conversion unit 47B is provided between the microcomputer 40 and the third voltage detector 56, and an input signal from the third voltage detector 56 to the second potential conversion unit 47B and an output signal from the second potential conversion unit 47B to the microcomputer 40 are insulated. However, the third voltage detector 56 is not required to be provided, and in that case, the second potential conversion unit 47B is unnecessary.

The third potential conversion unit 47C is provided between the microcomputer 40 and the third current detector 57, and an input signal from the third current detector 57 to the third potential conversion unit 47C and an output signal from the third potential conversion unit 47C to the microcomputer 40 are insulated.

The fourth potential conversion unit 47D is provided between the microcomputer 40 and the U-phase current detector 58u, and an input signal from the U-phase current detector 58u to the fourth potential conversion unit 47D and an output signal from the fourth potential conversion unit 47D to the microcomputer 40 are insulated.

The fifth potential conversion unit 47E is provided between the microcomputer 40 and the W-phase current detector 58w, and an input signal from the W-phase current detector 58w to the fifth potential conversion unit 47E and an output signal from the fifth potential conversion unit 47E to the microcomputer 40 are insulated.

An insulating IC such as a high-speed photocoupler or a digital isolator is adopted for the first potential conversion unit 47A, the second potential conversion unit 47B, the third potential conversion unit 47C, the fourth potential conversion unit 47D, and the fifth potential conversion unit 47E. In the present embodiment, a high-speed photocoupler having a transmission speed of 10 Mbps or more is adopted.

A decrease in the transmission speed from the first potential conversion unit 47A, the second potential conversion unit 47B, the third potential conversion unit 47C, the fourth potential conversion unit 47D, and the fifth potential conversion unit 47E generates a delay time of the circuit. Specifically, for example, when the transmission speed from the third potential conversion unit 47C decreases, overcurrent protection and current detection cannot be performed. Therefore, a high speed of 10 Mbps or more minimizes the influence of the delay time of the circuit.

### (3) Relationship between microcomputer 40 and first to fifth potential conversion units (47A to 47E)

In the present embodiment, the ground potential GND-A of the circuit from the first rectifier circuit 20A leading up to the first switching circuit 25A is a potential different from a ground potential GND-C of the active filter circuit 60.

When the ground potentials are different, the microcomputer needs to supply control signals having different ground potentials to the first switching circuit 25A and the third switching circuit 25C.

The microcomputer also needs to receive voltage detection signals having different ground potentials from the first voltage detector 23A and the third voltage detector 56.

Furthermore, the microcomputer needs to receive current detection signals having different ground potentials from the first current detector 24A, the third current detector 57, the U-phase current detector 58u, and the W-phase current detector 58w.

Therefore, a plurality of microcomputers is required. As a result, the cost increases.

Therefore, in the present embodiment, since one microcomputer 40 controls the first switching circuit 25A and the third switching circuit 25C, the ground potential of the third control signal PWM-3 to the third switching circuit 25C is converted into a different ground potential in the first potential conversion unit 47A.

Therefore, the ground potentials of the first control signal PWM-1 to the first switching circuit 25A and the third control signal PWM-3 to the third switching circuit 25C output from the microcomputer 40 may be the same ground potential GND-A.

The third voltage detection signal from the third voltage detector 56 to the microcomputer 40 is converted into a different ground potential in the second potential conversion unit 47B.

Therefore, the first voltage detection signal from the first voltage detector 23A to the microcomputer 40 and the second voltage detection signal from the third voltage detector 56 to the microcomputer 40 may have different ground potentials.

The third current detection signal from the third current detector 57 to the microcomputer 40 is converted into a different ground potential in the third potential conversion unit 47C.

Therefore, the first current detection signal from the first current detector 24A to the microcomputer 40 and the third current detection signal from the third current detector 57 to the microcomputer 40 may have different ground potentials.

The fourth current detection signal from the U-phase current detector 58u to the microcomputer 40 is converted into a different ground potential in the fourth potential conversion unit 47D.

Therefore, the first current detection signal from the first current detector 24A to the microcomputer 40 and the fourth current detection signal from the U-phase current detector 58u to the microcomputer 40 may have different ground potentials.

Furthermore, the fifth current detection signal from the W-phase current detector 58w to the microcomputer 40 is converted into a different ground potential in the fifth potential conversion unit 47E.

Therefore, the first current detection signal from the first current detector 24A to the microcomputer 40 and the fifth current detection signal from the W-phase current detector 58w to the microcomputer 40 may have different ground potentials.

### (3-1) First control signal PWM-1 to first switching circuit 25A

The microcomputer 40 generates the first control signal PWM-1 with the switching power source 31 as a reference potential, and outputs the first control signal PWM-1 to the first gate drive circuit 26A. The first control signal PWM-1 has a predetermined duty ratio for controlling rotation of the first motor 51A.

The first control signal PWM-1 is converted into a gate pulse by the first gate drive circuit 26A. The switching elements of upper and lower arms of the first switching circuit 25A are controlled to be turned on and off by the gate pulse, and a three-phase AC voltage is supplied to the first motor 51A.

### (3-2) Third control signal PWM-3 to third switching circuit 25C

The microcomputer 40 generates the third control signal PWM-3 with the switching power source 31 as a reference potential. The third control signal PWM-3 has a predetermined duty ratio for switching on and off of each switching element of the third switching circuit 25C.

Since the first potential conversion unit 47A is provided between the microcomputer 40 and the third gate drive circuit 26C, the ground potential GND-A of the third control signal PWM-3 input to the first potential conversion unit 47A is converted to the same potential as the ground potential GND-C on the output side of the first potential conversion unit 47A.

The third control signal PWM-3 subjected to the potential conversion is converted into a gate pulse by the third gate drive circuit 26C. The switching elements of the upper and lower arms of the third switching circuit 25C are controlled to be turned on and off by the gate pulse.

### (3-3) First voltage detection signal of first voltage detector 23A to microcomputer 40

The ground potential of the first voltage detector 23A is the same as the ground potential GND-A of the first switching circuit 25A and the microcomputer 40. Therefore, the first voltage detection signal from the first voltage detector 23A is directly input to the microcomputer 40.

### (3-4) Third voltage detection signal of third voltage detector 56 to microcomputer 40

The ground potential of the third voltage detector 56 is the same as the ground potential GND-C of the third switching circuit 25C. The second potential conversion unit 47B is provided between the third voltage detector 56 and the microcomputer 40. Therefore, the ground potential GND-C of the third voltage detection signal input to the second potential conversion unit 47B is converted to the same potential as the ground potential GND-A on the output side of the second potential conversion unit 47B. The third voltage detection signal subjected to potential conversion is input to the microcomputer 40.

### (3-5) First current detection signal of first current detector 24A to microcomputer 40

The ground potential of the first current detector 24A is the same as the ground potential GND-A of the first switching circuit 25A and the microcomputer 40. Therefore, the first current detection signal from the first current detector 24A is directly input to the microcomputer 40.

### (3-6) Third current detection signal of third current detector 57 to microcomputer 40

The ground potential of the third current detector 57 is the same as the ground potential GND-C of the third switching circuit 25C. The third potential conversion unit 47C is provided between the third current detector 57 and the microcomputer 40. Therefore, the ground potential GND-C of the third current detection signal input to the third potential conversion unit 47C is converted to the same potential as the ground potential GND-A on the output side of the third potential conversion unit 47C. The third current detection signal subjected to potential conversion is input to the microcomputer 40.

### (3-7) Fourth current detection signal of U-phase current detector 58u to microcomputer 40

The ground potential of the U-phase current detector 58u is the same as the ground potential GND-C of the third switching circuit 25C. The fourth potential conversion unit 47D is provided between the U-phase current detector 58u and the microcomputer 40. Therefore, the ground potential GND-C of the fourth current detection signal input to the fourth potential conversion unit 47D is converted to the same potential as the ground potential GND-A on the output side of the fourth potential conversion unit 47D. The fourth current detection signal subjected to potential conversion is input to the microcomputer 40.

### (3-8) Fifth current detection signal of W-phase current detector 58w to microcomputer 40

The ground potential of the W-phase current detector 58w is the same as the ground potential GND-C of the third switching circuit 25C. The fifth potential conversion unit 47E is provided between the W-phase current detector 58w and the microcomputer 40. Therefore, the ground potential GND-C of the fifth current detection signal input to the fifth potential conversion unit 47E is converted to the same potential as the ground potential GND-A on the output side of the fifth potential conversion unit 47E. The fifth current detection signal subjected to potential conversion is input to the microcomputer 40.

### (3-9) Effects

In the present embodiment, since the high-speed photocoupler is used as the first potential conversion unit 47A, the second potential conversion unit 47B, the third potential conversion unit 47C, the fourth potential conversion unit 47D, and the fifth potential conversion unit 47E, a delay in the transmission speed due to the operation time of the first potential conversion unit 47A, the second potential conversion unit 47B, the third potential conversion unit 47C, the fourth potential conversion unit 47D, and the fifth potential conversion unit 47E is suppressed.

The input signal and the output signal of the first potential conversion unit 47A are insulated, and any influence of noise will not directly have an effect in the signal input to the third gate drive circuit 26C.

Although the ground potentials of the first switching circuit 25A and the third switching circuit 25C are different from each other, the ground potentials of the third gate drive circuit 26C and the third switching circuit 25C are common to the ground potential GND-C on the output side of the first potential conversion unit 47A, and therefore, malfunction can be prevented.

Since the input signals and the output signals of the second potential conversion unit 47B, the third potential conversion unit 47C, the fourth potential conversion unit 47D, and the fifth potential conversion unit 47E are insulated, any influence of noise will not directly have an effect in the signal input to the microcomputer 40.

Although the ground potentials of the first voltage detector 23A and the first current detector 24A are different from the ground potentials of the third voltage detector 56, the third current detector 57, the U-phase current detector 58u, and the W-phase current detector 58w, the ground potential of each of the first voltage detector 23A and the first current detector 24A is common to the ground potential GND-A on the output side of each of the second potential conversion unit 47B, the third potential conversion unit 47C, the fourth potential conversion unit 47D, and the fifth potential conversion unit 47E, and thus, malfunction can be prevented.

As a result, the refrigerant control circuit 42, the first switching circuit 25A, and the third switching circuit 25C are controlled by one microcomputer 40.

### (4) Characteristics of second embodiment

(4-1)
   In the power source control circuit 102, the third switching circuit 25C has a reference potential different from the reference potential of the first switching circuit 25A. The microcomputer 40 outputs the first control signal PWM-1 for the first switching circuit 25A and a third control signal PWM-3 for the third switching circuit 25C. The first potential conversion unit 47A converts the potential of the third control signal PWM-3. In the power source control circuit 102, since the potential of either one of the two control signals can be converted by the first potential conversion unit 47A, two switching circuits having different reference potentials can be controlled by one microcomputer.
(4-2)
   In the power source control circuit 102, the first voltage detector 23A detects a voltage across the first smoothing capacitor 22A and outputs the detected voltage value as the first voltage detection signal to the microcomputer 40. The third voltage detector 56 detects a voltage across the third smoothing capacitor 52, and outputs the detected voltage value as the third voltage detection signal to the microcomputer 40. The second potential conversion unit 47B converts the reference potential of the third voltage detection signal.
(4-3)
   In the power source control circuit 102, the first current detector 24A detects a load current of the first switching circuit and outputs the detected current value as the first current detection signal to the microcomputer 40. The third current detector 57 detects a bus current of the third switching circuit 25C and outputs the detected current value as a third current detection signal to the microcomputer 40. The third potential conversion unit 47C converts the reference potential of the third current detection signal.
(4-4)
   In the power source control circuit 102, the U-phase current detector 58u detects a current flowing through the U phase of the third switching circuit 25C, and outputs the detected current value as the fourth current detection signal to the microcomputer 40. The fourth potential conversion unit 47D converts the reference potential of the fourth current detection signal.
(4-5)
   In the power source control circuit 102, the W-phase current detector 58w detects a current flowing through the W phase of the third switching circuit 25C, and outputs the detected current value as the fifth current detection signal to the microcomputer 40. The fifth potential conversion unit 47E converts the reference potential of the fifth current detection signal.
(4-6)
   The first potential conversion unit 47A, the second potential conversion unit 47B, the third potential conversion unit 47C, the fourth potential conversion unit 47D, and the fifth potential conversion unit 47E are high-speed photocouplers having a transmission speed of 10 Mbps or more. In the power source control circuit 102, a delay in the transmission speed due to the operation time of the first potential conversion unit 47A, the second potential conversion unit 47B, the third potential conversion unit 47C, the fourth potential conversion unit 47D, and the fifth potential conversion unit 47E is suppressed.
(4-7)
   The third switching circuit 25C is a power module in which a plurality of switching elements that generates a compensation current for suppressing a harmonic current is incorporated in one package. Modularization of the third switching circuit 25C facilitates design of a peripheral circuit of the third switching circuit in the printed wiring board 10.

### <Modification common to first embodiment and second embodiment>

### (1) First modification

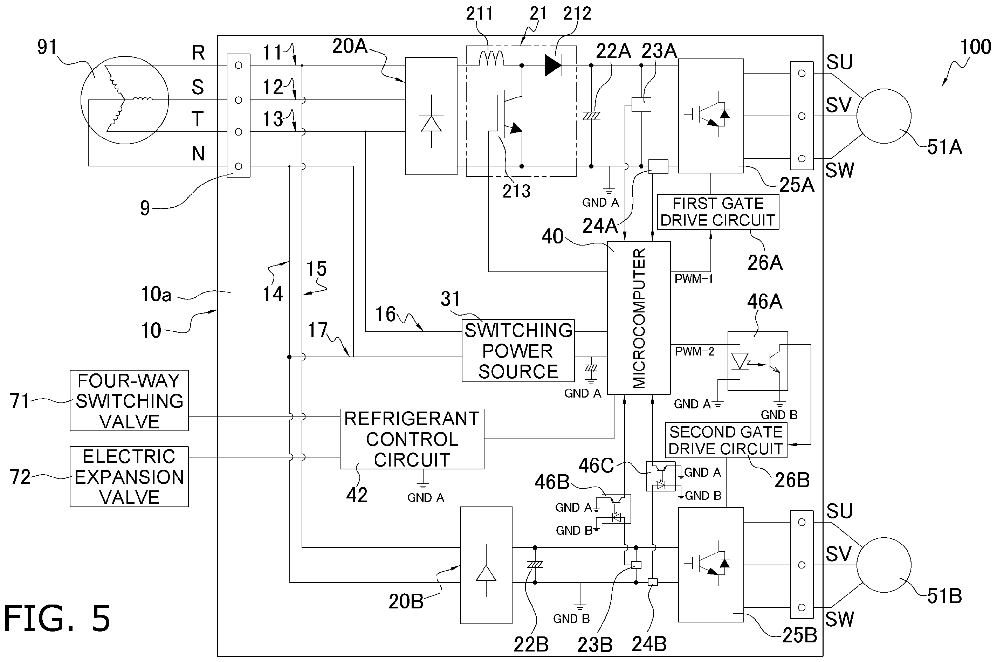

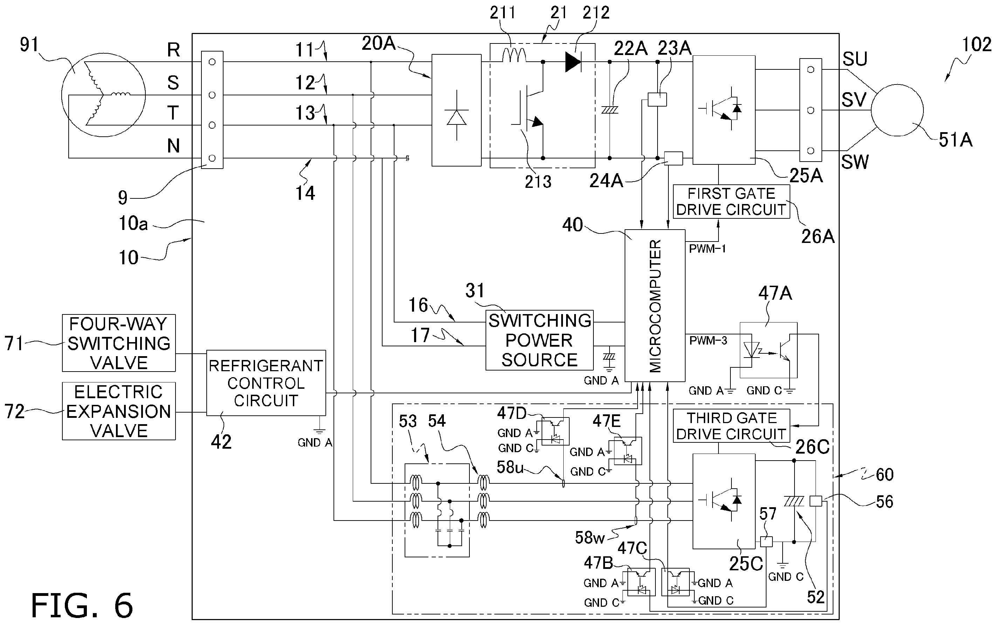

FIG. 5 is a circuit diagram showing a configuration of the power source control circuit 100 according to a first modification of the first embodiment. FIG. 6 is a circuit diagram showing a configuration of the power source control circuit 102 according to a first modification of the second embodiment.

In FIG. 5, a difference between the first modification of the first embodiment and the first embodiment is that a power factor correction circuit 21 is interposed between the first rectifier circuit 20A and the first smoothing capacitor 22A, and the other configurations are the same as in the first embodiment. Similarly, in FIG. 6, a difference between the first modification of the second embodiment and the second embodiment is that a power factor correction circuit 21 is interposed between the first rectifier circuit 20A and the first smoothing capacitor 22A, and the other configurations are the same as in the second embodiment. Therefore, only the power factor correction circuit 21 will be described here.

The power factor correction circuit 21 includes a boost reactor 211, a diode 212, and a switching element 213. The boost reactor 211 and the diode 212 are connected in series between a positive side of the first rectifier circuit 20A and a positive side of the first smoothing capacitor 22A. The diode 212 is connected in a forward direction from the boost reactor 211 toward the positive side of the first smoothing capacitor 22A.

The switching element 213 is provided so as to be able to conduct or cut off between the boost reactor 211 and the diode 212 and between a negative side of the first rectifier circuit 20A and a negative side of the first smoothing capacitor 22A by a control signal given from the microcomputer 40.

In the power factor correction circuit 21, the switching element 213 is turned on and off on the basis of the control signal input from the microcomputer 40 to the switching element 213, and a direct current input from the first rectifier circuit 20A via the boost reactor 211 is chopped at high speed. In this manner, the direct current from the first rectifier circuit 20A adjusts a voltage obtained by charging the first smoothing capacitor 22A.

The microcomputer 40 detects the voltage of the first smoothing capacitor 22A, and changes on and off of the switching element 213 by a control signal on the basis of the detection result or the like, and thus adjusts the voltage supplied to the first switching circuit 25A to improve a power factor.

Since the microcomputer 40 and the power factor correction circuit 21 have the common ground potential GND-A, the control signal is input without passing through a potential conversion unit.

For example, a series circuit of the switching element 213 and the diode 212 may be a power module incorporated in one package.

In the first modification of the first embodiment, the above configuration enables the refrigerant control circuit 42, the power factor correction circuit 21, the first switching circuit 25A, and the second switching circuit 25B having a ground potential different from the ground potential of the first switching circuit 25A to be controlled by one microcomputer 40.

Similarly, in the first modification of the second embodiment, the above configuration enables the refrigerant control circuit 42, the power factor correction circuit 21, the first switching circuit 25A, and the third switching circuit 25C having a ground potential different from the ground potential of the first switching circuit 25A to be controlled by one microcomputer 40.

### (2) Second modification

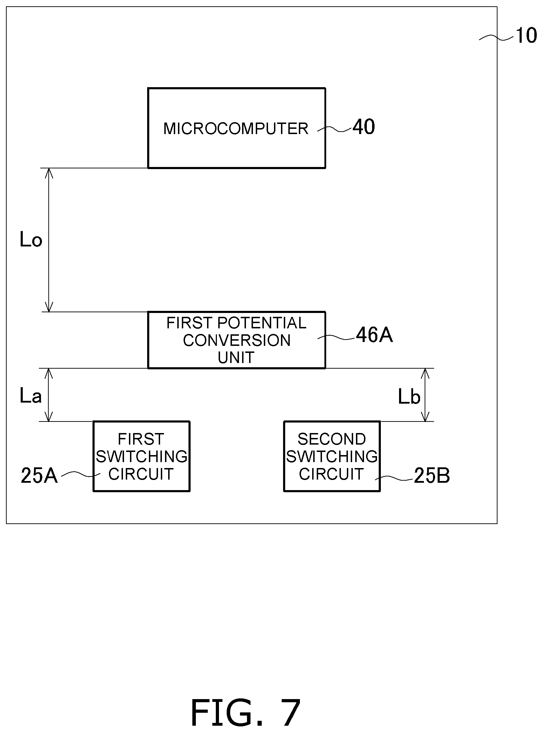

FIG. 7 is a partial plan view of the printed wiring board 10 showing a positional relationship between the first switching circuit 25A, the second switching circuit 25B, the microcomputer 40, and the first potential conversion unit 46A of the power source control circuit 100 according to a second modification of the first embodiment.

In FIG. 7, the first switching circuit 25A and the second switching circuit 25B are adjacent to each other. However, the first switching circuit 25A and the second switching circuit 25B are not required to be adjacent to each other.

The first potential conversion unit 46Ais provided between the microcomputer 40 and the second switching circuit 25B as in the first embodiment, and an input signal from the microcomputer 40 to the first potential conversion unit 46A and an output signal from the first potential conversion unit 46A to the second switching circuit 25B are insulated.

A shortest distance La from the first potential conversion unit 46A to the first switching circuit 25A or a shortest distance Lb from the first potential conversion unit 46A to the second switching circuit 25B is smaller than a shortest distance Lo from the microcomputer 40 to the first potential conversion unit 46A.

Both of the shortest distance La from the first potential conversion unit 46A to the first switching circuit 25A and the shortest distance Lb from the first potential conversion unit 46A to the second switching circuit 25B are desirably smaller than the shortest distance Lo from the microcomputer 40 to the first potential conversion unit 46A.

As the distance from the first potential conversion unit 46A to the switching circuit is shorter, routing of the conductive pattern linking the first potential conversion unit 46A and the switching circuit is simplified, and the size of the printed wiring board 10 is reduced, which contributes to downsizing of the power source control circuit 100.

If the second switching circuit 25B in FIG. 7 is replaced with the third switching circuit 25C, the configuration is applicable as a second modification of the second embodiment.

In that case, a shortest distance from the first potential conversion unit 47A to the first switching circuit 25A or a shortest distance from the first potential conversion unit 47A to the third switching circuit 25C is smaller than a shortest distance from the microcomputer 40 to the first potential conversion unit 47A, which contributes to downsizing of the power source control circuit 102.

### <Other embodiments>

### (1) Outline of power source control circuit 103

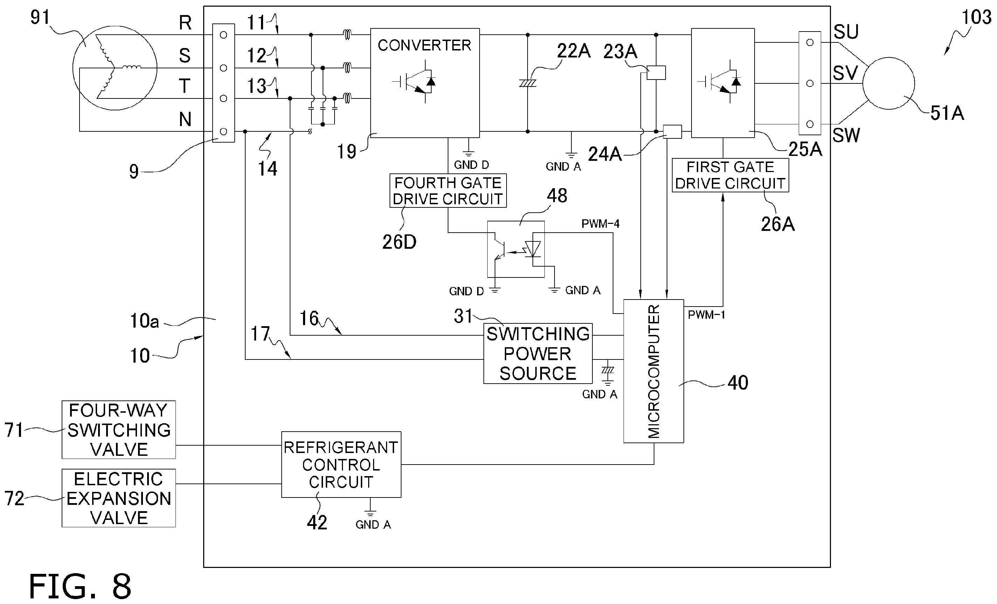

FIG. 8 is a circuit diagram showing a configuration of a power source control circuit 103 according to another embodiment. In FIG. 8, the power source control circuit 103 is mounted on a printed wiring board 10 configured such that the R phase, the S phase, the T phase, and the N phase are input from an AC power source that supplies a three-phase AC in a three-phase four-wire system.

The power source control circuit 103 includes the PWM converter 19, the first switching circuit 25A, the microcomputer 40, and a potential conversion unit 48.

The PWM converter 19 converts AC power of the R phase, the S phase, and the T phase into DC power. The first switching circuit 25A is connected to the PWM converter 19. The PWM converter 19 has a reference potential different from the reference potential of the first switching circuit 25A.

The microcomputer 40 outputs the first control signal PWM-1 for the first switching circuit 25A and a fourth control signal PWM-4 for the PWM converter 19. The potential conversion unit 48 converts a potential of the first control signal PWM-1 or the fourth control signal PWM-4.

The power source control circuit 103 of the present disclosure is equipped in, for example, an outdoor unit of a three-phase four-wire 400 V air conditioner.

### (2) Detailed configuration

In FIG. 8, among the components except for the PWM converter 19, the components denoted by the same reference signs as the components of the power source control circuit 100 shown in FIG. 1 have been described in the first embodiment, and thus will not be described here.

### (2-1) PWM converter 19

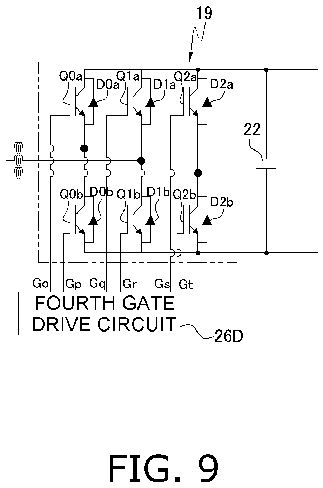

FIG. 9 is a configuration diagram of the PWM converter 19 and the fourth gate drive circuit 26D that drives the PWM converter 19. In FIG. 9, the PWM converter 19 includes a plurality of IGBTs (insulated gate bipolar transistors, hereinafter, simply referred to as transistors) Q0a, Q0b, Q1a, Q1b, Q2a, and Q2b and a plurality of diodes D0a, D0b, D1a, D1b, D2a, and D2b.

The transistors Q0a and Q0b are connected in series to constitute upper and lower arms, and a connection point therebetween is connected to an output side of the R phase of the AC power source 91. The transistors Q1a and Q1b are connected in series to constitute upper and lower arms, and a connection point therebetween is connected to an output side of the S phase of the AC power source 91. The transistors Q2a and Q2b are connected in series to constitute upper and lower arms, and a connection point therebetween is connected to an output side of the T phase of the AC power source 91.

The diodes D0a to D2b are respectively connected in parallel with the transistors Q0a to Q2b so that a collector terminal of each transistor connected to a cathode terminal of the corresponding diode and an emitter terminal of each transistor connected to an anode terminal of the corresponding diode.

The PWM converter 19 turns on or off the transistors Q0a to Q2b at timing instructed by the fourth gate drive circuit 26D. In this manner, a power source current is made substantially sinusoidal wave, a power source harmonic is suppressed, and a power source power factor is improved.

### (2-2) Fourth gate drive circuit 26D

The fourth gate drive circuit 26D changes on and off states of the transistors Q0a to Q2b of the PWM converter 19 on the basis of the fourth control signal PWM-4 from the microcomputer 40. The fourth gate drive circuit 26D generates pulsed gate control voltages Go, Gp, Gq, Gr, Gs, and Gt having the duty ratio determined by the microcomputer 40. The gate control voltages Go, Gp, Gq, Gr, Gs, and Gt thus generated are respectively applied to gate terminals of the transistors Q0a to Q2b.

### (2-3) Potential conversion unit 48

The potential conversion unit 48 is provided between the microcomputer 40 and the PWM converter 19, and insulates an input signal from the microcomputer 40 to the potential conversion unit 48 from an output signal from the potential conversion unit 48 to the PWM converter 19.

An insulating IC such as a high-speed photocoupler or a digital isolator is adopted for the potential conversion unit 48. In the present embodiment, a high-speed photocoupler having a transmission speed of 10 Mbps or more is adopted.

When the transmission speed from the potential conversion unit 48 decreases, a delay time of the circuit occurs, and overcurrent protection and current detection cannot be performed. Therefore, a high speed of 10 Mbps or more minimizes the influence of the delay time of the circuit.

### (3) Relationship between microcomputer 40 and potential conversion unit 48

In the present embodiment, the ground potential GND-D of the PWM converter 19 is a potential different from the ground potential GND-A of the first switching circuit 25A.

When the ground potentials are different, it is necessary to supply control signals having different ground potentials to the PWM converter 19 and the first switching circuit 25A, and a plurality of microcomputers is required. As a result, the cost increases.

Therefore, in the present embodiment, since one microcomputer 40 controls the PWM converter 19 and the first switching circuit 25A, the ground potential of the fourth control signal PWM-4 to the PWM converter 19 is converted into a different ground potential in the potential conversion unit 48.

Therefore, the ground potentials of the first control signal PWM-1 to the first switching circuit 25A and the fourth control signal PWM-4 to the PWM converter 19 output from the microcomputer 40 are the same ground potential GND-A.

### (3-1) First control signal PWM-1 to first switching circuit 25A

The microcomputer 40 generates the first control signal PWM-1 with the switching power source 31 as a reference potential, and outputs the first control signal PWM-1 to the first gate drive circuit 26A. The first control signal PWM-1 has a predetermined duty ratio for controlling rotation of the first motor 51A.

The first control signal PWM-1 is converted into a gate pulse by the first gate drive circuit 26A. The switching elements of upper and lower arms of the first switching circuit 25A are controlled to be turned on and off by the gate pulse, and a three-phase AC voltage is supplied to the first motor 51A.

### (3-2) Fourth control signal PWM-4 to PWM converter 19

The microcomputer 40 generates the fourth control signal PWM-4 with the switching power source 31 as a reference potential. The fourth control signal PWM-4 has a predetermined duty ratio for switching on and off of each switching element of the PWM converter 19.

Since the potential conversion unit 48 is provided between the microcomputer 40 and the PWM converter 19, the ground potential GND-A of the fourth control signal PWM-4 input to the potential conversion unit 48 is converted to the same potential as the ground potential GND-D on the output side of the potential conversion unit 48.

The fourth control signal PWM-4 subjected to potential conversion is converted into a gate pulse by the PWM converter 19. The switching elements of the upper and lower arms of the PWM converter 19 are controlled to be turned on and off by the gate pulse.

### (3-3) Effects

In the present embodiment, since the high-speed photocoupler is used as the potential conversion unit 48, a delay in the transmission speed due to the operation time of the potential conversion unit 48 is suppressed. The input signal and the output signal of the potential conversion unit 48 are insulated, and any influence of noise will not directly have an effect in the signal input to the PWM converter 19.

Although the ground potentials of the first switching circuit 25A and the PWM converter 19 are different from each other, the ground potentials of the fourth gate drive circuit 26D and the PWM converter 19 are common to the ground potential GND-D on the output side of the potential conversion unit 48, and therefore, malfunction can be prevented.

The embodiments of the present disclosure have been described above. Various modifications to modes and details should be available without departing from the gist and the scope of the present disclosure recited in the claims.

### REFERENCE SIGNS LIST

10: printed wiring board
20A: first rectifier circuit
20B: second rectifier circuit
21: power factor correction circuit
22A: first smoothing capacitor
22B: second smoothing capacitor
23A: first voltage detector
23B: second voltage detector
24A: first current detector
24B: second current detector
25A: first switching circuit
25B: second switching circuit
25C: third switching circuit
40: microcomputer
46A: first potential conversion unit
46B: second potential conversion unit
46C: third potential conversion unit
47A: first potential conversion unit
47B: second potential conversion unit
47C: third potential conversion unit
47D: fourth potential conversion unit
47E: fifth potential conversion unit
52: third smoothing capacitor
56: third voltage detector
57: third current detector
58u: U-phase current detector
58w: W-phase current detector
100: power source control circuit
102: power source control circuit
211: reactor
212: diode (rectifier element)
213: switching element (first switching element)

### CITATION LIST

### PATENT LITERATURE

Patent Literature 1: WO 2017/200027 A

## Claims

1. A power source control circuit (100) mounted on a printed wiring board (10) that configured such that an R phase, an S phase, a T phase, and an N phase are input from an AC power source that supplies a three-phase AC in a three-phase four-wire system, the power source control circuit comprising:
a first rectifier circuit (20A) that rectifies an AC voltage of an R phase, an S phase, and a T phase;
a second rectifier circuit (20B) that rectifies an AC voltage of any one of the R phase, the S phase, or the T phase and the N phase;
a first switching circuit (25A) connected to the first rectifier circuit (20A);
a second switching circuit (25B) that is connected to the second rectifier circuit (20B) and has a reference potential different from a reference potential of the first switching circuit (25A);
a microcomputer (40) that outputs a first control signal for the first switching circuit (25A) and a second control signal for the second switching circuit (25B); and
a first potential conversion unit (46A) that converts a potential of the first control signal or the second control signal.

2. The power source control circuit (100) according to claim 1, wherein a transmission speed of the first potential conversion unit (46A) is 10 Mbps or more.

3. The power source control circuit (100) according to claim 1 or 2, further comprising:
a first current detector (24A) that detects a load current of the first switching circuit (25A) and outputs a detected current value as a first current detection signal to the microcomputer (40);
a second current detector (24B) that detects a load current of the second switching circuit (25B) and outputs a detected current value as a second current detection signal to the microcomputer (40); and
a third potential conversion unit (46C) that converts a potential of the first current detection signal or the second current detection signal that has a reference potential different from a reference potential of the microcomputer (40).

4. The power source control circuit (100) according to claim 1 or 2, further comprising:
a first voltage detector (23A) that detects a voltage across a first smoothing capacitor (22A) that smooths an output voltage from the first rectifier circuit (20A), the first voltage detector outputting a detected voltage value as a first voltage detection signal to the microcomputer (40);
a second voltage detector (23B) that detects a voltage across a second smoothing capacitor (22B) that smooths an output voltage from the second rectifier circuit (20B), the second voltage detector outputting a detected voltage value as a second voltage detection signal to the microcomputer (40); and
a second potential conversion unit (46B) that converts a potential of the first voltage detection signal or the second voltage detection signal that has a reference potential different from a reference potential of the microcomputer (40).

5. The power source control circuit (100) according to any one of claims 1 to 4, wherein a shortest distance from the first potential conversion unit (46A) to the first switching circuit (25A) or a shortest distance from the first potential conversion unit (46A) to the second switching circuit (25B) is smaller than a shortest distance from the microcomputer (40) to the first potential conversion unit (46A).

6. The power source control circuit (100) according to any one of claims 1 to 5, wherein at least one of the first switching circuit (25A) or the second switching circuit (25B) is a power module in which a plurality of switching elements that converts DC power into AC power of a predetermined frequency is incorporated in one package.

7. A power source control circuit (102) mounted on a printed wiring board (10) that configured such that an R phase, an S phase, a T phase, and an N phase are input from an AC power source that supplies a three-phase AC in a three-phase four-wire system, the power source control circuit comprising:
a first rectifier circuit (20A) that rectifies an AC voltage of the R phase, the S phase, and the T phase;
a first switching circuit (25A) connected to the first rectifier circuit (20A);
a third switching circuit (25C) that is connected in parallel between the AC power source and the first rectifier circuit (20A) and has a reference potential different from a reference potential of the first switching circuit (25A);
a microcomputer (40) that outputs a first control signal for the first switching circuit (25A) and a third control signal for the third switching circuit (25C); and
a first potential conversion unit (47A) that converts a potential of the first control signal or the third control signal.

8. The power source control circuit (102) according to claim 7, wherein a transmission speed of the first potential conversion unit (47A) is 10 Mbps or more.

9. The power source control circuit (102) according to claim 7 or 8, further comprising:
a first current detector (24A) that detects a load current of the first switching circuit (25A) and outputs a detected current value as a first current detection signal to the microcomputer (40);
a third current detector (57) that detects a bus current of the third switching circuit (25C) and outputs a detected current value as a third current detection signal to the microcomputer (40); and
a third potential conversion unit (47C) that converts a potential of the first current detection signal or the third current detection signal that has a reference potential different from a reference potential of the microcomputer (40).

10. The power source control circuit (102) according to claim 7 or 8, further comprising:
a first voltage detector (23A) that detects a voltage across a first smoothing capacitor (22A) that smooths an output voltage from the first rectifier circuit (20A), the first voltage detector outputting a detected voltage value as a first voltage detection signal to the microcomputer (40);
a third voltage detector (56) that detects a voltage across a third smoothing capacitor (52) that smooths an output voltage from the third switching circuit (25C), the third voltage detector outputting a detected voltage value as a third voltage detection signal to the microcomputer (40); and
a second potential conversion unit (47B) that converts a potential of the first voltage detection signal or the third voltage detection signal that has a reference potential different from a reference potential of the microcomputer (40).

11. The power source control circuit (102) according to any one of claims 7 to 10, wherein a shortest distance from the first potential conversion unit (47A) to the first switching circuit (25A) or a shortest distance from the first potential conversion unit (47A) to the third switching circuit (25C) is smaller than a shortest distance from the microcomputer (40) to the first potential conversion unit (47A).

12. The power source control circuit (102) according to any one of claims 7 to 11, wherein the third switching circuit (25C) is a power module in which a plurality of switching elements that generates a compensation current for suppressing a harmonic current is incorporated in one package.

13. The power source control circuit (100, 102) according to any one of claims 1 to 12, further comprising
a power factor correction circuit (21) that includes a first switching element (213), a rectifier element (212), and a reactor (211), receives a voltage rectified by the first rectifier circuit (20A), and improves a power factor of the AC power source by the microcomputer (40) controlling the first switching element (213) to be turned on and off.

14. The power source control circuit (100, 102) according to claim 13, wherein the power source control circuit includes a power module in which at least the first switching element (213) and the rectifier element (212) are incorporated in one package.

15. An air conditioner comprising
the power source control circuit (100) according to any one of claims 1 to 14.
